# EUROPÄISCHE PATENTANMELDUNG

(11) **EP 2 363 532 A1**
(43) Veröffentlichungstag der Anmeldung: **07.09.2011**
(21) Anmeldenummer: 11001758.9
(22) Anmeldetag: 03.03.2011
(51) Int. Cl.: E01F 8/02, A01G 9/02

(54) **Pflanztrog als anreihbares Modul**

(30) Priorität: 03.03.2010 DE 102010010046
(71) Anmelder: Traunspurger, Marc, 97209 Veitshöchheim (DE)
(72) Erfinder: Traunspurger, Marc, 97209 Veitshöchheim (DE)
(74) Vertreter: Pöhner, Wilfried Anton

(57) **Zusammenfassung**

Pflanztrog als anreihbares Modul, bestehend aus wenigstens zwei, etwa vertikal ausgerichteten Ständerplatten (1) und wenigstens einer Seitenplatte (2) die mit beiden Ständerplatten verbindbar ist, wobei in die beiden vertikalen Seitenkanten jeder Ständerplatte je ein Schlitz (11) eingebracht ist, der gegenüber der Grundfläche der Ständerplatte (1) geneigt verläuft und in den wenigstens eine Seitenplatte (2) einsteckbar ist und der kürzer als die Abmessung der darin eingesteckten Seitenplatte in Richtung des Einsteckens ist.

## Beschreibung

Die Erfindung bezieht sich auf einen Pflanztrog als anreihbares Modul, bestehend aus wenigstens zwei, etwa vertikal ausgerichteten Ständerplatten und wenigstens einer Seitenplatte, die mit beiden Ständerplatten verbunden ist.

Pflanztröge oder Hochbeete sind bereits seit sehr langer Zeit bekannt. Im einfachsten Fall bestehen sie aus Seitenwänden, die etwa vertikal ausgerichtet sind und miteinander zu einer umlaufenden und in sich geschlossenen Wand verbunden sind. Im einfachsten Fall ist der so gebildete Hohlkörper nach unten hin zum Erdreich offen, so dass zwischen die Wände eingefülltes Erdreich oder anderes Substrat mit der darunter liegenden Schicht in Verbindung treten kann. Dadurch ist z.B. der Abfluss von überschüssigem Wasser aus der Füllung des Pflanztroges durch die offene Unterseite möglich.

Bekannt sind aber auch nach unten hin geschlossene, dann wannenartige Gefäße, die aus einer Grundfläche und daran sich anschließenden, vertikal ausgerichteten Seitenwänden bestehen. Mit zunehmender Größe eines solchen Pflanztroges nimmt auch dessen Gewicht zu.

Dabei ist auch zu beachten, dass die Füllung des Pflanzentroges bei intensiven Regenfällen so stark angefeuchtet werden kann, dass sie fließfähig wird und dadurch einen hydraulischen Druck auf die Seitenwände des Pflanztroges ausübt. Auch wenn die dabei entstehenden Drücke nur kurzzeitig auftretende Spitzenwerte sind, so dürfen sie trotzdem nicht zu einer Zerstörung des Pflanztroges führen.

Pflanztröge, die derartigen Kräften gewachsen sind, sind in einstückiger Ausführung nur sehr aufwendig zu produzieren und relativ gewichtig, so dass ihre Versetzung aufwendige Hebezeuge oder äquivalente Maschinen erfordert.

Zur Erleichterung dieser Problematik präsentiert auf aktuellem Stand der Technik die DE 20 2004 009 864, Nägele einen Pflanztrog, der aus mehreren, "hochkant" ausgerichteten Betonplatten besteht. Diese Platten überlappen sich wie die Steine in einem Mauerwerksverband. Da die einzelnen Platten vertikal ausgerichtet sind, ist der Mauerwerksverband jedoch an der Außenfläche nicht sichtbar, sondern nur von der Oberkante der Umrandung des Pflanzentroges her.

Damit diese Umrandung zu einem in sich geschlossenen Rechteck geformt werden kann, sind jeweils vier L-förmige Winkelstücke erforderlich, die die Ecken bilden.

Es ist ein Nachteil dieser Konstruktion, dass die Winkelstücke auch im zerlegtem Zustand nach wie vor sehr sperrig sind.

Ein weiterer Nachteil eines derartigen Pflanztroges ist, dass er nicht stapelbar ist. Da nur eine vertikale Ausrichtung der Seitenwände vorgegeben ist, würde sich beim Auftürmen von mehreren derartigen Pflanztrögen nur eine glattflächige Säule bilden, an deren Seitenwand nichts eingepflanzt werden könnte.

Um eine seitlich nutzbare Pflanzwand aus einzelnen Elementen zu bilden, beschreibt das Gebrauchsmuster DE 92 18 070 sog. "Pflanzbrettelemente". Das sind Flächen, die gegenüber der Grundfläche im Wesentlichen schräg verlaufen. An die Stirnseiten dieser Pflanzbretter sind vertikale Wandsegmente angeformt, deren Unterkante und deren Oberkante jeweils horizontal ausgerichtet sind.

Auf die Oberkante eines derartigen Segmentes wird die Unterkante des nächsthöheren Segmentes gestellt. Auf diese Weise können senkrechte Wände gebildet werden, die schuppenartig zueinander angeordnete Pflanzbretter aufweisen. In die Lücke zwischen zwei benachbarte, schräg ausgerichtete Pflanzbretter kann Erdreich eingefüllt werden, in dem Pflanzen wachsen können.

Im Querschnitt weist eine solche Pflanzwand also ein sägezahnartiges Profil auf. Die geneigten Abschnitte werden von den Pflanzbrettern gebildet und die waagerechten Abschnitte dieses Profils sind die Oberflächen der jeweiligen Erdreichfüllungen.

Ein Nachteil dieses Systems ist, dass die geneigten "Pflanzbretter" nicht von den vertikalen Seitenwänden getrennt werden können, sondern unlösbar damit verbunden sind. Bei Nichtgebrauch benötigen sie deshalb einen relativ voluminösen Lagerraum.

Weil die vertikalen Seitenwände die Pflanzbretter sowohl in der Höhe wie auch in der Breite überragen, sind sie nachteiliger Weise relativ sehr gewichtig.

Eine weitere Einschränkung ist, dass nebeneinander angeordnete Pflanzbretter jeweils eigene vertikale Seitenwände benötigen.

Eine weitere Einschränkung ist, dass der Abstand zwischen zwei Seitenwänden durch das einstückige Formteil jeweils fest vorgegeben ist. Wenn ein anderer Abstand gewünscht oder benötigt wird, so muss ein vollständig neues Formteil erstellt werden.

Auf diesem Hintergrund hat sich die Erfindung die Aufgabe gestellt, einen Pflanztrog als anreihbares Modul zu beschreiben, der aus einfach zu hantierenden und einfach herzustellenden, möglichst kompakten Elementen besteht, die bei Nichtgebrauch nur ein sehr geringes Lagervolumen erfordern und schnell und einfach ohne zusätzliche Werkzeuge zu Pflanztrögen miteinander verbunden werden können, die in einer Linie oder in einer Ebene aneinander gereiht werden können und in vertikaler Richtung aufeinander stapelbar sind, so dass sie eine bepflanzbare Wand bilden.

Als Lösung lehrt die Erfindung, dass in wenigstens eine Stirnfläche jeder Ständerplatte wenigstens ein Schlitz eingebracht ist, der gegenüber der Grundfläche der Ständerplatte geneigt verläuft und in den wenigstens eine Seitenplatte einsteckbar ist und der kürzer als die Abmessung der darin eingesteckten Seitenplatte in Richtung des Einsteckens ist.

Ein wesentliches Merkmal der Erfindung ist also, dass die Seitenplatten mit den Ständerplatten dadurch verbunden werden, dass sie in einen Schlitz eingesteckt werden. Derartige Steckverbindungen sind aus vielen anderen Bereichen bekannt und bewährt. Sie können sehr schnell hergestellt und ebenso schnell wieder gelöst werden.

Ein weiterer Vorteil ist, dass zum "Montieren" der beiden Komponenten keine weiteren Materialien oder Werkzeuge erforderlich sind. Da die Schlitze grundsätzlich gegenüber der Grundfläche jeder Ständerplatte geneigt angeordnet sind, sind auch die darin eingesteckten Seitenplatten stets geneigt, so dass beim Stapeln mehrerer derartiger Module die gewünschte, sägezahnartige Profilierung mit der Schaffung von horizontalen Pflanzflächen ermöglicht ist.

Ein ganz besonderes Merkmal der Erfindung ist, dass die Schlitze grundsätzlich kürzer sind, als die darin eingesteckten Seitenplatten in der Richtung des Einsteckens. Die Seitenplatten sind also zum größten Teil freitragend. Das hat den ganz wesentlichen Vorteil, dass in den äußeren Bereich der Pflanzflächen, die sich auf der Oberseite der Seitenplatten bilden, keine Stützen hinein ragen, die benachbarte Pflanzflächen voneinander trennen. Deshalb ist ein gemeinsamer Bewuchs und eine gemeinsame Bewässerung von benachbarten Beeten möglich.

Ein weiterer Vorteil ist, dass die "Grenze" zwischen benachbarten Beeten fließend ist und vollständig bepflanzt werden kann. Daher kann eine nach diesem System erstellte Pflanzwand in kurzer Zeit vollständig begrünt werden, indem die Pflanzen in jedem einzelnen Pflanztrog bis zur Oberkante des nächsten Pflanztroges wachsen können.

Ein weiterer Vorzug der Erfindung ist, dass die Seitenplatten an jedem beliebigen Punkt ihrer Länge in die Schlitze eingesteckt werden können. Dadurch ist keine sehr enge Toleranz beim Aufstellen erforderlich.

Ein weiterer Vorteil ist, dass eine einzige Seitenplatte alternativ auch zu beiden Seiten eines Schlitzes herausragen kann. Es ist also möglich, relativ sehr lange Seitenplatten herzustellen, die nicht nur an ihren Enden durch Ständerplatten unterstützt werden, sondern auch dazwischen. Je nach erforderlicher Tragkraft können die zusätzlichen Ständerplatten näher aneinandergesetzt oder weiter auseinander geschoben werden. Bei einer teilweisen Entleerung eines Hochbeetes können solche Ständer auch noch von einer offenen Stirnseite eines Pflanztroges her nachträglich in die bestehende Struktur eingefügt werden.

Es ist ein wesentliches Merkmal der Erfindung, dass die Seitenplatten in der Richtung ihres Einsteckens in den Schlitz länger sind als der Schlitz. In der Praxis sind die Seitenplatten in dieser Richtung zumeist wenigstens doppelt so lang wie der Schlitz.

Je nach Materialwahl können z.B. mit armiertem Beton für die Ständerplatten und Beton oder verstärktem Beton für die Seitenplatten Auskragungen der Seitenplatten erzielt werden, die vier oder fünfmal so lang wie der Schlitz sind.

In der aller einfachsten Konfiguration eines Hochbeetes wird nur eine einzige Seitenplatte von zwei Ständerplatten gehalten. In dieser Konfiguration dient die Seitenplatte an der abfallenden Flanke eines Erdhügels zu dessen Unterstützung. Auch mehrere solcher Seitenplatten, die jeweils durch Ständerplatten gehalten werden, können so an der Flanke eines Erdhügels aufgestellt werden. Auf diese Weise wird die bepflanzbare Fläche an der Flanke des Erdhügels wesentlich vergrößert und der Erdhügel zugleich stabilisiert.

In einer anderen Variante weisen die Ständerplatten auf zwei gegenüberliegenden Stirnflächen je einen Schlitz auf. Beide Ständerplatten sind etwa parallel und zueinander beabstandet angeordnet und auf beiden Seiten der Ständerplatten ist jeweils eine Seitenplatte in die Schlitze beider Ständerplatten eingesteckt. Dadurch entsteht ein Pflanztrog mit etwa V-förmigem Profil, der nach unten hin eine Öffnung aufweist.

Das ist die kleinste, trogförmige Einheit, die Erdreich in einem Abstand zur Grundfläche des Troges aufnehmen kann. Sie kann einzeln verwendet werden oder durch Aneinanderreihen und/oder durch Aufeinanderstapeln größere Pflanztröge bilden.

Eine bekannte und übliche Methode zur Nutzung eines solchen, nach unten offenen Pflanztroges ist die Befüllung mit größeren Zweigen als unterster Lage und darauf geschichteten, kleineren Zweigen und als nächster Schicht Moos oder einem Flies und darauf Erdreich oder ein anderes Substrat, in dem die Pflanzen wurzeln.

Durch das miteinander verhakte Holzwerk in der untersten Schicht wird auch bei einer Überflutung des Pflanztroges eine schnelle und konsequente Entwässerung gesichert. Die darüber angeordneten, feineren Schichten verhindern jedoch, dass so viel Feuchtigkeit austritt, dass die Pflanze vertrocknet. Vielmehr halten diese Schichten jeweils das benötigte Maß an Feuchtigkeit im Erdreich zurück.

Eine Konfiguration aus zwei Ständerplatten und zwei, auf beiden Seiten darin eingesteckten Seitenplatten ist der kleinstmögliche Pflanztrog oder als Grundeinheit das Kernstück für größere Pflanztröge.

Die Grundeinheit kann sehr einfach dadurch erweitert werden, dass die Seitenplatten in horizontaler Richtung nur bis zur Hälfte in den Schlitz eingeschoben werden. Dadurch kann in die andere Hälfte des Schlitzes eine weitere, an die erste angrenzende Seitenplatte eingesteckt werden, die an ihrem freien Ende durch Einstecken in den Schlitz einer nächsten, baugleichen Ständerplatte gehalten wird. Auf diese Weise lässt sich ein rinnenartiger Pflanztrog bilden, dessen Länge prinzipiell nicht begrenzt ist.

Als eine weitere, sehr vorteilhafte Ausführungsform ist die Oberseite jeder Ständerplatte parallel zu ihrer Unterseite ausgerichtet, so dass auf der Oberseite jeder Ständerplatte eine weitere Ständerplatte aufgestellt werden kann. Dadurch ist die Bildung von Säulen aus aufeinander gestapelten, gleichartigen Ständerplatten möglich.

Mit Hilfe derartiger Säulen kann ein wandartiger Pflanztrog - auch als Pflanzwand bezeichnet - mit mehreren, übereinander verlaufenden Streifen von Erdreich gebildet werden. Dazu müssen die aus aufeinander gestapelten Ständerplatten gebildeten Säulen so in einer Reihe angeordnet werden und so zueinander ausgerichtet werden, dass die Schlitze in benachbarten Standplatten miteinander fluchten.

Außerdem muss der Abstand der Säulen zueinander so gewählt werden, dass in jeden der beiden Schlitze aller Ständerplatten - mit Ausnahme der Endbereiche - jeweils eine erste Seitenplatte von der einen Stirnfläche her und eine zweite Seitenplatte von der anderen Stirnfläche her etwa bis zur Mitte des Schlitzes hereinragt.

Nur bei der jeweils äußersten Säule einer Wand kann der Abstand zu der jeweils nächsten Säule etwas geringer sein, weil in die äußersten Säulen nur von einer Seite her Seitenplatten in die Schlitze hineinragen müssen, die dann sinnvoller Weise auf der gesamten Länge der Schlitze aufliegen sollten.

Alternativ zu der mehrstückigen Ausbildung einer Säule durch das Aufeinanderstapeln von einzelnen Ständerplatten kann sie auch einstückig ausgebildet sein. Die Säule ist dann eine hohe Ständerplatte, die mehr als nur einen einzigen Schlitz aufweist.

Aus zweien der zuvor beschriebenen wandartigen Pflanztröge oder Pflanzwände kann ein vergrößerter Pflanztrog gebildet werden, indem zwei Reihen von Säulen etwa parallel zueinander aufgestellt werden. Nur in die nach außen weisenden Schlitze der Standplatten der Säulen werden jeweils Seitenplatten eingesteckt. Sie bilden dann ― wie zuvor schon beschrieben - vertikal aufragende Wände aus schuppenartig angeordneten und gegeneinander beabstandeten Streifen aus mehreren Seitenplatten. Der Unterschied zu der vorbeschriebenen, einreihigen Pflanzwand ist der Abstand der beiden Säulenreihen zueinander, also der "mehrreihige" Aufbau.

Die Säulen können alternativ auch einstückig hergestellt werden. Sie weisen dann zahlreiche Schlitze auf. Für mehrreihige Pflanztröge können auch Säulen hergestellt werden, die nur an einer Stirnfläche mehrere Schlitze übereinander aufweisen. Die gegenüberliegende Stirnfläche weist keine Schlitze auf, weil die Säule dort an das Innere eines Hochbeetes oder an eine Wand angrenzt.

Zur Bepflanzung eines erfindungsgemäßen, mehrreihigen Pflanztroges steht dann die Oberfläche der Erdbefüllung auf der nach oben weisenden Fläche jeder Seitenplatte zur Verfügung. Eine weitere, bepflanzbare Fläche entsteht dadurch, dass der Zwischenraum zwischen den beiden Säulenreihen ebenfalls mit Ästen, Moos und Erdreich gefüllt werden kann, so dass auch die Oberfläche dieser Füllung bepflanzbar ist.

In der oben beschriebenen Anordnung sind die beiden parallel zueinander verlaufenden Pflanzwände nicht miteinander verbunden, so dass sich in der "Gasse" zwischen den beiden Wänden Platz für Erdreich bietet, das an den Stirnseiten mit je einer ansteigenden Rampe abschließt.

In dieser Gasse können auch etwa waagerechte Streben eingebaut werden, die die Säulen von gegenüberliegenden Säulenreihen miteinander verbinden und so für eine weitere Stabilisierung sorgen. Die Streben werden von dem eingefüllten Erdreich später wieder abgedeckt.

In einer weiteren, alternativen Ausführungsform können der Anfang und das Ende der "Gasse" zwischen zwei parallel zueinander verlaufenden Pflanzwänden durch jeweils eine weitere, erfindungsgemäße Pflanzwand verschlossen werden. Jede dieser dort einzufügenden Pflanzwände muss aus wenigstens zwei Säulen aus aufeinandergestapelten Ständerplatten bestehen, in deren nach aussen weisende Schlitze Seitenplatten eingesteckt sind. Auf diese Weise entsteht ein sehr großer Pflanztrog, dessen Außenwände bepflanzbar sind.

In einer derartigen Anordnung sind jeweils nur die Eckbereiche nicht bepflanzbar, in denen die Seitenflächen von zwei rechtwinklig zueinander ausgerichteten und sich an ihrer Schmalseite berührenden Säulen aus aufeinander gestapelten Ständerplatten sichtbar sind.

Um auch diese Eckbereiche noch bepflanzen zu können, schlägt die Erfindung vor, dass im Eckbereich die Seitenplatten über die sichtbaren Säulen hinaus verlängert werden, so dass sie in den bisher leeren Eckbereich hinein ragen.

Für einen gleichmäßigen Anschluss an die rechtwinklig dazu verlaufenden Seitenplatten der nächsten Seite des vergrößerten Pflanztroges sollten diese Verlängerungen trapezförmig sein. Wenn auch die jeweils benachbarten, im rechten Winkel ausgerichteten Seitenplatten der nächsten Seite des Pflanztroges ebenfalls in den Eckbereich hinein verlängert sind, berühren sich die Kanten der beiden trapezförmigen Verlängerungen. Von aussen her läuft dann die Reihe der aneinander angrenzenden Seitenplatten kontinuierlich bis zur Ecke des Pflanztroges durch und "knickt" dort im rechten Winkel ab.

Wenn die schräg verlaufenden Seitenkanten der Verlängerungen senkrecht zu den großen Außenflächen ausgerichtet sind, bildet sich an den Ecken eine Fuge zwischen den Seitenkanten zweier benachbarter Verlängerungen. Um diese Fuge weiter zu verkleinern schlägt die Erfindung vor, dass die schräge Kantenfläche der trapezförmigen Verlängerung aus zwei aneinandergrenzenden Teilflächen besteht, die jeweils in einem Winkel von 45 Grad zu den beiden großen Flächen der Verlängerung ausgerichtet sind und die miteinander einen Winkel von 90 Grad bilden. Die Kantenfläche ist also nicht mehr eben, sondern hat die Form eines Satteldaches. Dadurch berühren sich zwei benachbarte Verlängerungen, die zueinander im rechten Winkel stehen, auf jeweils einer Teilfläche der Kantenfläche und nicht nur an einer Kante der Kantenfläche.

Auf diese Weise wird erreicht, dass auf jeder Höhe der Pflanzwand ein gleichmäßig umlaufender Streifen an bepflanzbarem Erdreich gebildet wird.

Die Säule aus aufeinander gestapelten Ständerplatten ist bei den zuvor beschriebenen, wandartigen oder vergrößerten Pflanztrögen ein wesentliches Element. Um ihre Standfestigkeit weiter zu erhöhen, z.B. bei heftigen Stürmen oder anderen Naturkatastrophen, schlägt die Erfindung vor, dass bei wenigstens einer Säule in wenigstens einen der freien Schlitze möglichst im oberen Bereich ein Zuganker eingehängt ist, der nach unten geführt wird und im Bereich der Aufstellungsfläche des Pflanztroges befestigt wird, z.B. an einem dort gelagerten großen Betonblock oder einem anderen gewichtigen Gegenstand. Alternativ kann der Zuganker auch in die Aufstellungsfläche einbetoniert werden.

Bei den vielfach besprochenen Säulen werden zur Bildung von Pflanzwänden nur auf der äußeren Seite Seitenplatten in die Schlitze eingesteckt. Dadurch entsteht ein Übergewicht an der Aussenkante. Um diesem Übergewicht ein Gegengewicht an der anderen Seite entgegen zu setzen, schlägt die Erfindung vor, dass bei wenigstens einer Säule in einen der nach innen weisenden, freien Schlitze - möglichst im oberen Bereich der Säule - eine kleine Verbindungsplatte eingesteckt wird, auf deren herausragender Hälfte eine weitere, auf dem "Kopf stehende" Standplatte mit einem ihrer beiden Schlitze aufgesteckt wird.

Der Vorteil dabei, nicht ein weiteres Sonderteil als Gegengewicht zu konstruieren, zu fertigen und zu beschaffen, sondern für diese Funktion nur ein weiteres Exemplar der sowieso schon vorhandenen Ständerplatten zu verwenden. Weil deren Schlitze nach unten weisen, wird als einziges neu zu fertigendes Teil nur eine kleine, zusätzliche Verbindungsplatte benötigt. Im einfachsten Fall ist es eine kleine Platte aus sehr hoch armiertem Beton.

Als eine weitere Ausführungsvariante beschreibt die Erfindung, wie eine Pflanzwand vor die Wand eines Gebäudes gesetzt werden kann und gegen diese eine ebene Rückseite bildet. Dazu muss als ein weiteres Formteil eine vertikal anzuordnende Seitenplatte geformt werden. Das Besondere dieser speziellen Seitenplatte sind zwei Nasen, die auf einer Fläche angeformt sind. Diese Nasen sind geneigt ausgerichtet und komplementär zu den Schlitzen der Standplatten geformt. Damit kann die vertikale Standplatte in die Schlitze von zwei Standplatten eingeschoben werden. Bei Säulen aus aufeinander gestapelten Ständerplatten bildet sich auf diese Weise eine ebene Rückwand aus zahlreichen, "vertikalen" Seitenplatten.

Bei den zuvor beschriebenen, vergrößerten Pflanztrögen bildet sich ein sehr großer Innenraum. Dieser Innenraum bietet Platz für die Verankerung von den jeweils tragenden Säulen, zum Beispiel durch Zuganker. Bereits vorgestellt wurde die Idee, einen Zuganker in einem freien Schlitz einer Ständerplatte zu verankern.

Eine andere Alternative ist es, jede Ständerplatte mit einer horizontal durchlaufenden Bohrung zu versehen. Durch diese Bohrung kann ein Zuganker hindurchgezogen werden, der dann anderwärts befestigt werden kann.

Ein weitere Alternative für die Absicherung der Säulen ist eine vertikal durch jede Ständerplatte hindurch laufende Bohrung, die mit der Bohrung in der nächsten Ständerplatte fluchtet, so dass ein langer Zuganker durch die Säule hindurchgezogen werden kann. Dieser Zuganker kann z.B. in einer Bodenplatte befestigt werden und an seinem oberen Ende mit einer Verschraubung auf die oberste Ständerplatte gedrückt werden.

Bisher beschrieben wurden Pflanzwände, bei denen die Ständerplatten jeweils genau senkrecht übereinander angeordnet worden sind. Möglich ist es jedoch auch, jede weiter aufgesetzte Ständerplatte geringfügig zu verschieben, so dass eine leicht geneigte Pflanzwand entsteht.

Im einfachsten Fall können die Ständerplatten stufenlos mit ihrer ebenen Unterseite auf der ebenen Oberseite der nächst tieferen Ständerplatte verschoben werden. Als Alternative dazu kann auch eine stufenweise Verschiebung vorgesehen werden. Dazu schlägt die Erfindung vor, dass die Oberseiten der Ständerplatten mit Zähnen, Rippen, Wülsten, Kegeln und/oder anderen Ausformungen besetzt sind und die Unterseiten der Ständerplatten mit jeweils dazu komplementären Einformungen versehen sind.

Wenn diese Ausformungen in jeweils gleichem Abstand zueinander angeordnet sind, können zwei aufeinander gestellte Standplatten um jeweils eine oder mehrere Abstandseinheiten in horizontaler Richtung gegeneinander verschoben aufeinander gesetzt werden. Durch die Ausformungen werden sie in dieser Position gehalten.

Ein für die Ständerplatten gut geeignetes Material ist armierter Beton. Im Prinzip sind jedoch auch viele andere Materialien geeignet. Je nach der gewünschten Lebensdauer können sogar Holzelemente eingesetzt werden. Auch die Seitenplatten können aus Holz oder Holzwerkstoff bestehen.

Für eine sehr lange Lebensdauer bevorzugt die Erfindung jedoch Beton. Sinnvoll sind z.B. die Gehwegplatten aus nichtarmiertem Beton. Diese Platten sind in sehr großer Stückzahl zu niedrigen Preisen verfügbar und von bekannt hoher Lebensdauer. Ihre einzige Einschränkung ist ihr relativ hohes Gewicht. Es kann durch das Eingießen einer Armierung und/oder eine Verstärkung mit Fasern reduziert werden.

Falls eine noch weitere Reduzierung des Gewichtes der Platten gefordert wird, schlägt die Erfindung vor, dass die Seitenplatten gewellt oder trapezförmig profiliert werden. Derartige Profile können aus Faserbeton oder aus Blech hergestellt werden.

Eine andere Alternative zur Reduzierung des Gewichtes der Seitenplatten ist die Einprägung von kassettenartigen Vertiefungen und/oder die Anformung von rippenartigen Versteifungen.

Im Folgenden sollen weitere Einzelheiten und Merkmale der Erfindung anhand von Beispielen näher erläutert werden. Diese sollen die Erfindung jedoch nicht einschränken, sondern nur erläutern. Es zeigt in schematischer Darstellung:
- Figur 1: Kleinste Grundeinheit eines erfindungsgemäßen Pflanztroges
- Figur 2: Durch Aneinanderreihung und durch Stapelung vergrößerter, einreihiger Pflanztrog
- Figur 3: Vergrößerter Pflanztrog aus mehreren Reihen von zu Säulen aufeinander gestapelten Ständerplatten

Die Figuren zeigen im Einzelnen:

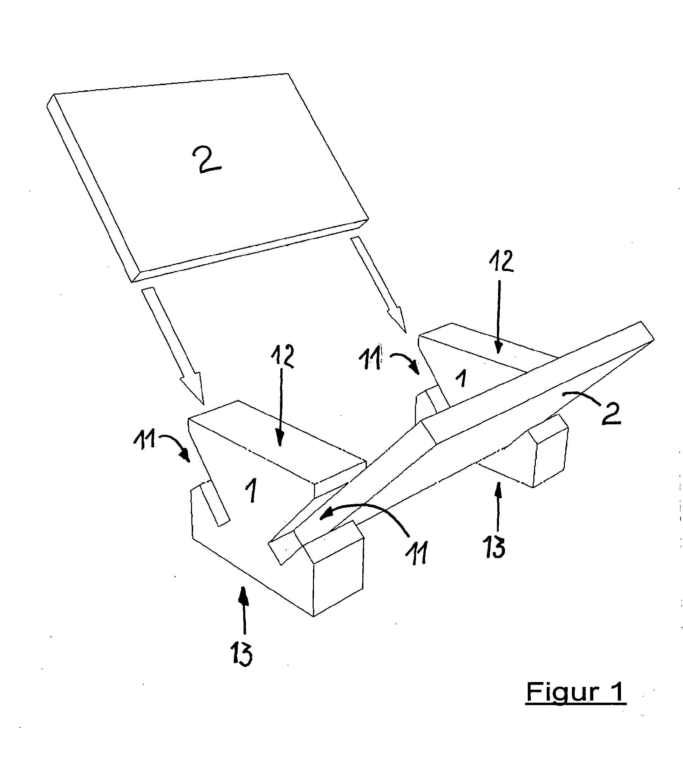

In **Figur 1** ist in perspektivischer Darstellung die kleinste Grundeinheit eines erfindungsgemäßen Pflanztroges gezeigt. Im Vordergrund ist eine Ständerplatte 1 dargestellt, die parallel zu einer zweiten Ständerplatte 1 im Hintergrund ausgerichtet ist. Jede Ständerplatte 1 weist an ihren beiden vertikalen Kanten je einen schräg stehenden Schlitz 11 auf.

In die zum Betrachter hin weisenden Schlitze 11 der beiden Ständerplatten 1 ist eine erste Seitenplatte 2 eingesteckt. In Figur 1 ist dargestellt, wie die zweite Seitenplatte 2 in die beiden anderen Schlitze 11 eingesteckt wird, was durch jeweils einen Doppelpfeil symbolisiert ist.

In Figur 1 ist sehr gut zu erkennen, dass die beiden Ständerplatten 1 soweit "auseinander gerückt" sind, dass die bereits eingesteckte Seitenplatte 2 nur jeweils die Hälfte der beiden Schlitze 11 beansprucht. Die andere, in Figur 1 noch unbenutzte Hälfte der Schlitze 11 ist freigelassen worden, um darin jeweils eine weitere Seitenplatte 2 von der nächsten, daran angereihten Einheit eines Pflanztroges einstecken zu können.

In Figur 1 ist einfach nachvollziehbar, dass alternativ zu dem hier gezeichneten, relativ großen Abstand der beiden Ständerplatten 1 der Abstand auch etwas verkleinert werden kann, so dass die geneigt verlaufenden Stirnkanten der Seitenplatte 2 mit der Front der Ständerplatten 1 fluchten oder sogar darüber hinausragen. Diese Stellung ist für einen einzelnen Pflanztrog, der nicht weiter verlängert werden soll, sinnvoll.

In Figur 1 ist schnell zu erkennen, dass die Oberseite 12 jeder Ständerplatte 1 parallel zur Unterseite 13 jeder Ständerplatte 1 verläuft und deshalb als Standfläche für weitere Ständerplatten 1 dienen kann. Eine solche Ausbaustufe ist dargestellt in:

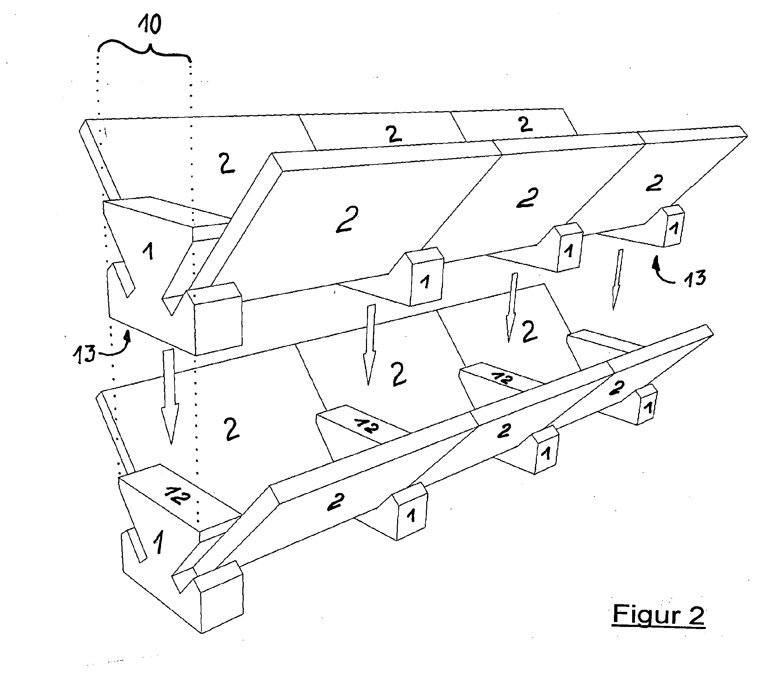

**Figur 2**, die zwei übereinander gestapelte und verlängerte Pflanztröge zeigt. In der unteren Ebene sind insgesamt vier Ständerplatten 1 zueinander parallel und miteinander fluchtend aufgestellt. Ihr Abstand zueinander ist etwas kleiner als die Länge der Seitenplatten 2, so dass jede Seitenplatte 2 jeweils eine Hälfte eines Schlitzes 11 beansprucht. Die andere Hälfte wird von der benachbarten Seitenplatte 2 ausgefüllt. Auf diese Weise kann ein Pflanztrog von einer prinzipiell nicht begrenzten Länge aufgebaut werden.

In Figur 2 wird als ein wesentlicher Vorteil eines erfindungsgemäßen, verlängerten Pflanztroges deutlich, dass er bei der Befüllung mit Erdreich oder Substrat über die Oberseite 12 der Ständerplatten 1 hinaus befüllt werden kann, so dass sich ein durchgehender Streifen von bepflanzbarem Erdreich ergibt.

Ein weiterer Vorteil ist aus Figur 2 entnehmbar, nämlich dass der Pflanztrog nach unten hin eine kleine Öffnung aufweist. Sie ist so klein, dass sie durch eingelagertes Astwerk oder ähnliches soweit verfüllt werden kann, dass das darüber geschichtete Erdreich nicht durchfällt, aber darin eingedrungene, übermäßige Feuchtigkeit nach unten hin austreten kann.

In Figur 2 ist durch jeweils große Doppelpfeile dargestellt, wie ein zweiter, auf drei Einheiten verlängerter Pflanztrog als nächst höhere Ebene auf die Oberseiten 12 jeder Ständerplatte 1 aufgestellt werden kann.

Dank des parallelen Verlaufes der Oberseite 12 zur Unterseite 13 jeder Ständerplatte 1 können die Ständerplatten 1 zu hohen, vertikalen Säulen 10 aufgetürmt werden. Weil in Figur 2 die Säulen 10 noch nicht vollständig sind, sondern im Stadium ihres Entstehens dargestellt sind, sind sie mit gepunkteten Linien und je einer Klammer gekennzeichnet.

In Figur 2 wird nachvollziehbar, dass auf diese Weise schmale, aber hohe Lärmschutzwände errichtet werden können. Die oberste Ebene weist eine durchlaufende, bepflanzbare Fläche auf. In den darunter liegenden Ebenen ist die bepflanzbare Fläche jeweils nur durch die Säule 10 aus mehreren Ständerplatten 1 unterbrochen. Aber zwischen der Oberkante der Seitenplatten 2 und der Säule 10 läuft jeweils ein bepflanzbarer Streifen des eingefüllten Erdreiches durch.

Vorteilhaft und in Figur 2 nachvollziehbar ist auch, dass die bepflanzbare Fläche einer jeden Ebene durch die gesamte, bepflanzbare Wand hindurch verläuft. Deshalb können in die Breite wachsende Pflanzen auch beim Einsetzen auf nur einer Seite einer Pflanzwand trotzdem auf die andere Seite herüber wachsen.

Als ein weiterer Vorteil wird in Figur 2 die gemeinsame Bewässerung mehrerer Ebenen deutlich. Es ist im Prinzip möglich, nur in die oberste Ebene Wasser einzufüllen. Durch die untere Öffnung wird ein Zuviel an Wasser nach unten heraustreten und in die nächste Ebene eintreten.

Sofern die Pflanzen kurzzeitig eine Übermenge an Wasser vertragen, wird dadurch die Bewässerung sehr vereinfacht. Natürlich kann die Bewässerung auch Ebene für Ebene von der Seite her erfolgen.

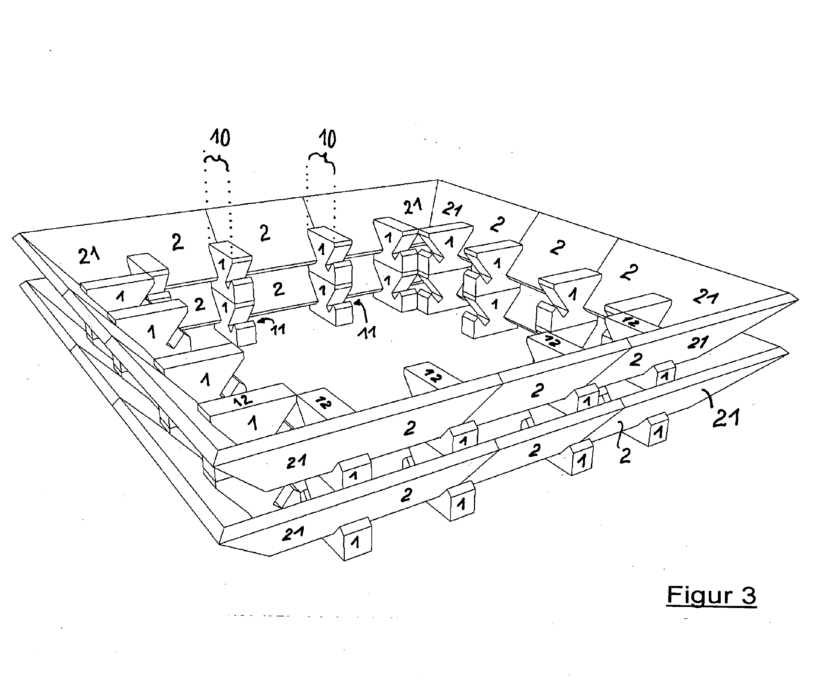

In **Figur 3** ist ein stark vergrößerter, sog. "mehrreihiger" Pflanztrog dargestellt, der aus parallel zueinander verlaufenden Säulenreihen besteht und dadurch eine sehr große Ebene überdecken kann. Dieser Pflanztrog besteht aus insgesamt vier Reihen von Säulen 10 aus mehreren übereinander gestapelten Ständerplatten 1. Diese Säulenreihen berühren sich nur in den Ecken des Pflanztroges.

In Figur 3 wird gut erkennbar, dass sämtliche Säulen 1 ausschließlich aus der standardmäßigen Ständerplatte 1 bestehen. Ein Sonderteil ist also nicht erforderlich.

Figur 3 zeigt als eine weitere Besonderheit eine spezielle Ecklösung. Damit die Reihe der an der Seite durchlaufenden Seitenplatten 2 an der Ecke nicht unterbrochen wird, sondern sich die beiden, im rechten Winkel aufeinander treffenden Reihen von Seitenplatten 2 bündig berühren, sind die Seitenplatten 2 an der Ecke jeweils durch eine trapezförmige Verlängerung 21 erweitert.

Diese Verlängerung 21 wird getragen, indem die verlängerte Seitenplatte 2 auf zwei Ständerplatten 1 ruht. An ihrer senkrecht zur Unterkante verlaufenden Seitenkante lässt die Seitenplatte 2 im Schlitz 11 noch die Hälfte frei, so dass darin eine angrenzende, rechteckige, standardmäßige Seitenplatte 2 eingesteckt werden kann. Aber an ihrer anderen Seite verläuft die verlängerte Seitenplatte 2 durch den Schlitz der an der Ecke stehenden Ständerplatte 1 vollständig hindurch und ragt auf der anderen Seite mit ihrer Verlängerung 21 darüber hinaus.

Die Verlängerung 21 schließt sich mit ihrer schräg verlaufenden Seitenkante bündig an die Verlängerung 21 der benachbarten Seitenplatte 2 an, die ebenfalls mit einer trapezförmigen Verlängerung 21 versehen ist. Dadurch wird ein um den gesamten vergrößerten Pflanztrog durchgehend herumlaufender, bepflanzbarer Bereich ermöglicht und zugleich auch der Eckbereich genutzt.

In Figur 3 wird deutlich, dass in einer solchen, mehrreihigen Konfiguration eine sehr große Grundfläche überdeckt werden kann. Es entsteht ein Hochbeet, dessen oberste, bepflanzbare Ebene sogar etwas größer ist als die Grundfläche auf dem es steht. Zusätzlich wird auch in den darunter liegenden Ebenen auf die Seitenflächen Erdreich aufgefüllt, so dass die Summe der insgesamt bepflanzbaren Fläche deutlich größer ist als die Grundfläche des Hochbeetes.

In Figur 3 sind viele Säulen 10 sichtbar, die in diesem ― einfachsten ― Fall nur aus zwei aufeinander stehenden Ständerplatten 1 bestehen.

In Figur 3 ist jedoch ohne weiteres nachvollziehbar, dass bei den hier vorgestellten Proportionen der Ständerplatten 1 eine Auftürmung zu sehr viel höheren Säulen möglich ist.

### Bezugszeichenliste

- 1: Ständerplatten, vertikal ausgerichtet
- 10: Säulen aus mehreren, aufeinander gestapelten Ständerplatten 1
- 11: Schlitz, in beiden Seitenkanten jeder Ständerplatte 1
- 12: Oberseite der Ständerplatten 1
- 13: Unterseite der Ständerplatten 1
- 2: Seitenplatte, in Schlitze 11 einsteckbar
- 21: Verlängerung der Seitenplatte 2

## Patentansprüche

1. Pflanztrog als anreihbares Modul, jeweils bestehend aus
- wenigstens zwei, etwa vertikal ausgerichteten Ständerplatten 1 und
- wenigstens einer Seitenplatte 2, die mit beiden Ständerplatten 1
verbunden ist
**dadurch gekennzeichnet, dass**
in wenigstens eine Stirnfläche jeder Ständerplatte 1 wenigstens ein Schlitz 11 eingebracht ist,
- der gegenüber der Grundfläche der Ständerplatte 1 geneigt verläuft und
- in den wenigstens eine Seitenplatte 2 einsteckbar ist und
- der kürzer als die Abmessung der darin eingesteckten Seitenplatte 2 in der Richtung des Einsteckens ist.

2. Pflanztrog nach Anspruch 1, **dadurch gekennzeichnet, dass** die Seitenplatte 2 in der Richtung des Einsteckens in den Schlitz 11 wenigstens doppelt so lang wie der Schlitz 11 ist.

3. Pflanztrog nach einem der vorhergehenden Ansprüche, **dadurch gekennzeichnet, dass** auf beiden Seiten einer Ständerplatte 1 je eine Seitenplatte 2 in den Schlitz 11 eingesteckt ist

4. Stapelbarer Pflanztrog nach einem der vorhergehenden Ansprüche, **dadurch gekennzeichnet, dass** die Oberseite 12 der Ständerplatten 1 parallel zur Unterseite 13 der Ständerplatten 1 ausgerichtet ist und auf der Oberseite 12 eine weitere Ständerplatte 1 aufstellbar ist.

5. Wandartiger Pflanztrog nach Anspruch 4, **dadurch gekennzeichnet, dass**
- er aus mehreren, jeweils zu einer Säule 10 aufeinander gestapelten Ständerplatten 1 besteht und
- alle Säulen 10 in einer Reihe angeordnet sind und
- so zueinander ausgerichtet sind, dass die Schlitze 11 in benachbarten Ständerplatten 1 miteinander fluchten und
- der Abstand der Säulen 10 zueinander so gewählt ist, dass in einen Schlitz 11 jeder Ständerplatte 1 jeweils eine erste Seitenplatte 2 von der einen Seitenfläche her und eine zweite Seitenplatte 2 von der anderen Seitenfläche her etwa bis zur Mitte des Schlitzes 11 hereinragt.

6. Vergrößerter Pflanztrog nach Anspruch 5, **dadurch gekennzeichnet, dass**
- zwei Reihen von Säulen 10 etwa parallel zueinander aufgestellt sind und
- nur in die nach außen weisenden Schlitze 11 jeweils Seitenplatten 2 eingesteckt sind, die zwei zueinander beabstandete Wände aus schuppenartig angeordneten und gegeneinander beabstandeten Streifen aus mehreren Seitenplatten 2 bilden.

7. Vergrößerter Pflanztrog nach Anspruch 6, **dadurch gekennzeichnet, dass** wenigstens eine Öffnung zwischen den beiden Säulenreihen durch eine weitere Wand verschlossen ist, die aus wenigstens zwei Säulen 10 aus aufeinander gestapelten Standplatten 1 und Seitenplatten 2 in den nach außen weisenden Schlitzen 11 besteht.

8. Vergrößerter Pflanztrog nach Anspruch 7, **dadurch gekennzeichnet, dass** an einer Ecke, wo zwei Säulen 10 aus aufeinander gestapelten Standplatten 1 sich an jeweils einer Schmalseite berühren, die Seitenplatten 2 durch je eine trapezförmige, horizontal angeformte Verlängerung 21 bis zur Ecke des Pflanztroges hin verlängert sind, wo sie die Kante der trapezförmigen Verlängerung 21 von der benachbarten, rechtwinklig dazu angeordneten Seitenplatte 2 berühren.

9. Vergrößerter Pflanztrog nach Anspruch 8, **dadurch gekennzeichnet, dass** die schräge Kantenfläche der trapezförmigen Verlängerung 21 aus zwei aneinandergrenzenden Teilflächen besteht, die jeweils in einem Winkel von 45 Grad zu den beiden großen Flächen der Verlängerung ausgerichtet sind und die miteinander einen Winkel von 90 Grad bilden.

10. Pflanztrog nach einem der Ansprüche 6 bis 9, **dadurch gekennzeichnet, dass** bei wenigstens einer Säule 10 in wenigstens einen der freien Schlitze 11 ein Zuganker eingehängt ist, der nach unten geführt ist und im Bereich der Aufstellungsfläche des Pflanztroges befestigt ist.

11. Pflanztrog nach einem der Ansprüche 6 bis 9, **dadurch gekennzeichnet, dass** bei wenigstens einer Säule 10 als Gegengewicht gegen die Last der nur an der Außenseite eingesteckten Seitenplatten 2 in wenigstens einen der nach innen weisenden, freien Schlitze 11 eine kleine Verbindungsplatte eingesteckt ist, auf deren herausragender Hälfte der Schlitz 11 einer weiteren Standplatte 1 aufgesteckt ist, deren Oberseite 12 nach unten weist.

12. Pflanztrog nach einem der vorhergehenden Ansprüche, **dadurch gekennzeichnet, dass** er wenigstens eine weitere Sonderseitenplatte aufweist,
- die vertikal ausgerichtet ist und
- auf der zwei Nasen angeformt sind,
- die geneigt ausgerichtet sind und
- die in die Schlitze 11 von zwei Standplatten 1 eingesteckt sind.

13. Pflanztrog nach einem der vorhergehenden Ansprüche, **dadurch gekennzeichnet, dass** die Standplatten 1
- eine vertikal durchlaufende Bohrung und/oder
- eine horizontal durchlaufende Bohrung aufweisen,
durch welche jeweils ein Zuganker führbar ist.

14. Pflanztrog nach einem der vorhergehenden Ansprüche, **dadurch gekennzeichne**t, dass die Oberseiten 12 der Standplatten 1 mit Zähnen, Rippen, Wülsten, Kegeln und/oder anderen Ausformungen besetzt sind und die Unterseiten 13 mit jeweils dazu komplementären Einformungen versehen sind.

15. Pflanztrog nach Anspruch 14, **dadurch gekennzeichnet, dass** die Zähne, Rippen, Wülste, Kegel und/oder anderen Ausformungen in gleichem Abstand zueinander angeordnet sind, sodass zwei Standplatten 1 um jeweils eine oder mehrere Abstandseinheiten in horizontaler Richtung gegeneinander verschoben aufeinander gesetzt werden können.

16. Pflanztrog nach einem der vorhergehenden Ansprüche, **dadurch gekennzeichnet, dass** die Standplatten 1 aus armiertem Beton bestehen.

17. Pflanztrog nach einem der vorhergehenden Ansprüche, **dadurch gekennzeichnet, dass** die Seitenplatten 2 aus Beton bestehen, der
- eine Armierung und/ oder
- Fasern als Verstärkung
enthalten kann.

18. Pflanztrog nach einem der vorhergehenden Ansprüche, **dadurch gekennzeichnet, dass** die Seitenplatten 2 gewellt oder trapezförmig profiliert sind und auf dieser gewellten oder profilierten Schicht wenigstens eine weitere Platte aufliegt oder damit verbunden ist.

19. Pflanztrog nach einem der vorhergehenden Ansprüche, **dadurch gekennzeichnet, dass** in die Außenfläche der Standplatten 1 und/oder der Seitenplatten 2 kassettenartige Vertiefungen eingeformt oder rippenartige Versteifungen angeformt sind.
